# FASCICULE DE BREVET EUROPEEN

(11) **EP 0 498 683 B1**
(45) Date de publication et mention de la délivrance du brevet: **20.07.1994**
(21) Numéro de dépôt: 92400026.8
(22) Date de dépôt: 07.01.1992
(51) Int. Cl.: B23P 19/00

(54) **Dispositif d'insertion d'une pièce cylindrique dans un orifice sans chanfrein, et procédé d'insertion mis en oeuvre par un tel dispositif**
Vorrichtung zum Einführen eines zylindrischen Teils in einem Loch ohne Abschrägung und Einführungsverfahren mit einer solchen Vorrichtung
Device for inserting a cylindrical part in a orifice without chamfer, and inserting method using this device

(30) Priorité: 08.01.1991 FR 9100154
(43) Date de publication de la demande: 12.08.1992
(73) Titulaire: RENAULT AUTOMATION, 92109 Boulogne-Billancourt (FR)
(72) Inventeur: Thurier, Yvan, F-94320 Thiais (FR)
(74) Mandataire: Ernst-Schonberg, Michel

(56) Documents cités:
- DE-A- 2 216 340
- GB-A- 781 959
- US-A- 3 952 393

## Description

La présente invention concerne un dispositif d'insertion d'une pièce cylindrique dans un orifice d'un organe mécanique, et également un procédé d'insertion mis en oeuvre par un tel dispositif.

La pièce cylindrique peut avoir une section quelconque (circulaire, carrée, hexagonale, etc.), tandis que l'orifice peut aussi avoir une section quelconque mais bien entendu compatible avec la section de la pièce cylindrique, car cette pièce est guidée dans l'orifice.

Une solution connue consiste à pratiquer des chanfreins sur la partie inférieure de la pièce cylindrique ou sur la partie supérieure de l'orifice. Voir par exemple dans US-A- 3952393.

Mais cela n'est pas toujours possible, notamment dans un moteur à combustion interne. En effet, la pièce cylindrique à introduire (qui est dans ce cas un piston) ne comporte pas de chanfrein en partie basse de sa jupe, et l'orifice (qui est dans ce cas un alésage du bloc-moteur) ne comporte pas de chanfrein en partie haute, c'est-à-dire sensiblement au niveau du joint de culasse.

Pour permettre néanmoins une introduction d'un piston dans un alésage d'un bloc-moteur, sur une installation robotisée, de nombreuses solutions ont été appliquées telles que, par exemple, l'utilisation de systèmes de vision, de systèmes de retour d'effort, etc.

Mais toutes ces solutions font appel à des techniques sophistiquées dont la mise en oeuvre industrielle est lourde et rendue délicate par l'utilisation excessive de capteurs et de dispositifs d'asservissement associés.

La présente invention a pour but de permettre l'introduction aisée d'une pièce cylindrique dans un orifice, à l'aide d'une solution purement mécanique et simple à mettre en oeuvre.

La présente invention a pour objet un dispositif d'insertion d'une pièce cylindrique dans un orifice pratiqué dans un organe mécanique.

Selon l'invention, ce dispositif comprend :
- un corps mobile capable d'être posé sur une surface de l'organe mécanique et d'être maintenu en position fixe par rapport audit organe;
- un passage traversant pratiqué dans ledit corps, de section adaptée à celle de la pièce cylindrique;
- au moins trois patins mobiles entre une position déployée de centrage dans laquelle ils entrent en contact avec la paroi de l'orifice de l'organe mécanique, et une position rétractée dans laquelle ils n'empêchent pas l'insertion de la pièce cylindrique dans le passage traversant;

ledit corps présentant un chanfrein à l'entrée du passage traversant afin de faciliter l'introduction de la pièce cylindrique dans ce passage traversant.

Selon une autre caractéristique de l'invention, la position déployée de centrage des patins est telle que les patins entrent également en contact avec la paroi du passage traversant du corps mobile.

Selon une autre caractéristique, la position rétractée est telle que les patins n'empêchent pas l'insertion de la pièce cylindrique dans le passage traversant du corps.

Selon une autre caractéristique de l'invention, chaque patin est rendu mobile par l'intermédiaire de deux biellettes, la rotation de ces biellettes provoquant un déplacement latéral et vertical du patin, le patin étant toujours en position verticale.

Selon une autre caractéristique de l'invention, le déplacement latéral des patins permet leur placage contre la paroi de l'orifice et la paroi du passage traversant, en fin de course des biellettes.

Chaque biellette tourne autour d'un axe de rotation, un des deux axes de rotation représentant un axe de manoeuvre de l'ensemble patins-biellettes, cet axe de manoeuvre étant relié à une bielle entraînée par un organe de manoeuvre tel qu'un vérin par exemple.

Selon un mode de réalisation particulier, ce dispositif comporte trois patins disposés à 120° et manoeuvrés chacun par un axe de manoeuvre, deux axes de manoeuvre faisant saillie du côté gauche de leurs patins associés, tandis que l'autre axe de manoeuvre fait saillie du côté droit, le corps étant ainsi dégagé sur une partie de sa périphérie. Ceci est particulièrement avantageux quand deux orifices sont proches l'un de l'autre et qu'il faut insérer une pièce cylindrique dans chaque orifice, car le dégagement permet de placer deux dispositifs d'insertion côte-à-côte, très proches l'un de l'autre.

La présente invention a également pour objet un procédé d'insertion d'une pièce cylindrique dans un orifice pratiqué dans un organe mécanique.

Selon l'invention, ce procédé comporte les étapes suivantes :
- on pose sur une surface de l'organe mécanique un dispositif muni d'un corps présentant un passage traversant de section adaptée à la pièce cylindrique et un chanfrein à l'entrée dudit passage, le passage traversant du corps se trouvant approximativement aligné avec l'orifice de l'organe mécanique;
- on centre le corps précité par rapport à l'orifice de l'organe mécanique;
- on maintient fermement en position centrée le corps par rapport à l'organe mécanique;
- on introduit la pièce cylindrique dans le passage traversant du corps précité, puis jusque dans l'orifice de l'organe mécanique.

Selon une autre caractéristique de ce procédé, on effectue le centrale du corps par rapport à l'orifice à l'aide de patins qui passent d'une position rétractée à une position déployée.

Selon une autre caractéristique du procédé, entre l'opération de maintien et l'opération d'introduction, on fait passer les patins de leur position déployée à leur position rétractée.

Selon encore une autre caractéristique du procédé, entre l'opération de pose et l'opération de centrage, on maintient de façon lâche le corps du dispositif contre la surface de l'organe mécanique.

Il est décrit ci-après à titre d'exemple nullement limitatif et en référence aux dessins annexés, un dispositif et un procédé selon l'invention permettant l'insertion d'une pièce cylindrique à section circulaire, qui est dans ce cas un piston, dans un orifice qui est dans ce cas un alésage d'un bloc-moteur d'un moteur à combustion interne.
Les figures 1a, 1b, 1c montrent trois étapes d'une opération de centrage effectuée par un dispositif de l'invention;
la figure 2 montre, en vue de dessus, selon une coupe II de la figure 3, deux dispositifs selon l'invention, posés chacun sur la surface supérieure d'un bloc-moteur;
la figure 3 est une coupe selon III de la figure 2, montrant un seul patin d'un dispositif;
la figure 4 est également une coupe selon III de la figure 2, mais le patin est escamoté;
la figure 5 est une vue de côté selon V de la figure 2, montrant un organe de manoeuvre d'un patin.

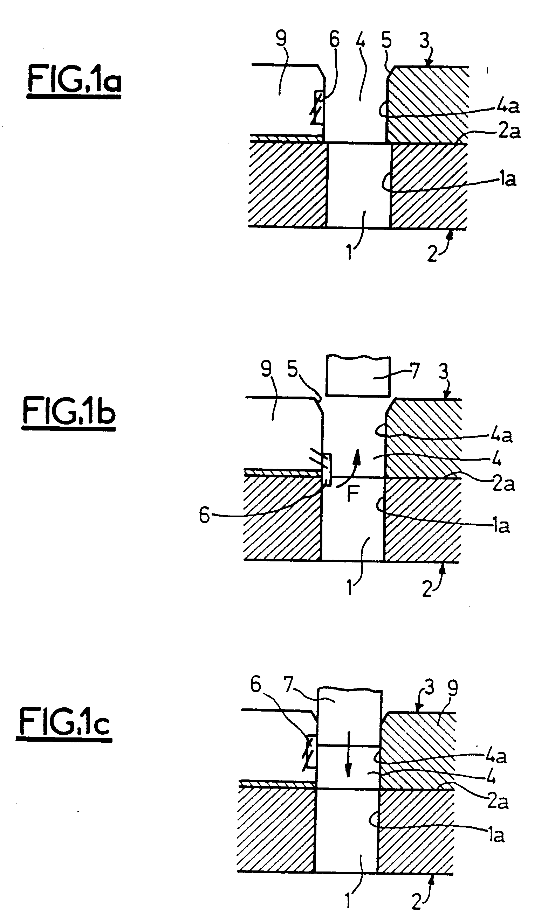

Dans les figures 1a, 1b, 1c, sont représentés un alésage 1 pratiqué dans un bloc-moteur 2, un dispositif d'insertion 3 comportant un passage traversant 4 muni à sa partie supérieure d'un chanfrein 5 et un seul patin 6, les deux autres patins n'étant pas représentés. Le patin 3 est mobile entre une position rétractée dans laquelle il est escamoté dans une fente 9 du dispositif 3, et une position déployée (montrée en figure 1b), dans laquelle il est en appui sur la paroi la de l'alésage 1, mais également contre la paroi 4a du passage traversant 4.

L'opération d'insertion sera décrite plus en détail après la description des autres figures, mais une première description sommaire des différentes étapes, selon les figures 1a, 1b, 1c, permet de comprendre le fonctionnement d'un tel dispositif selon l'invention, et le procédé d'insertion mis en oeuvre.

La figure 1a montre le positionnement du dispositif 3 sur la pièce 2, l'orifice 4 et l'alésage 1 étant alignés approximativement.

La figure 1b montre un patin qui, en position déployée, vient en appui sur la paroi de l'alésage 1, ce qui assure le centrale du dispositif 3 par rapport à l'alésage 1 du bloc-moteur 2, après glissement du dispositif 3 sur la surface supérieure 2a du bloc-moteur 2. Cette figure 1b montre également selon la flèche F, l'escamotage des patins. Le dispositif est alors bridé par des moyens quelconques sur le bloc-moteur.

La figure 1c montre l'introduction d'un piston 7 dans le passage du dispositif 3, grâce à la présence du chanfrein 5, puis dans l'alésage 1, car l'orifice 4 et l'alésage 1 sont correctement centrés.

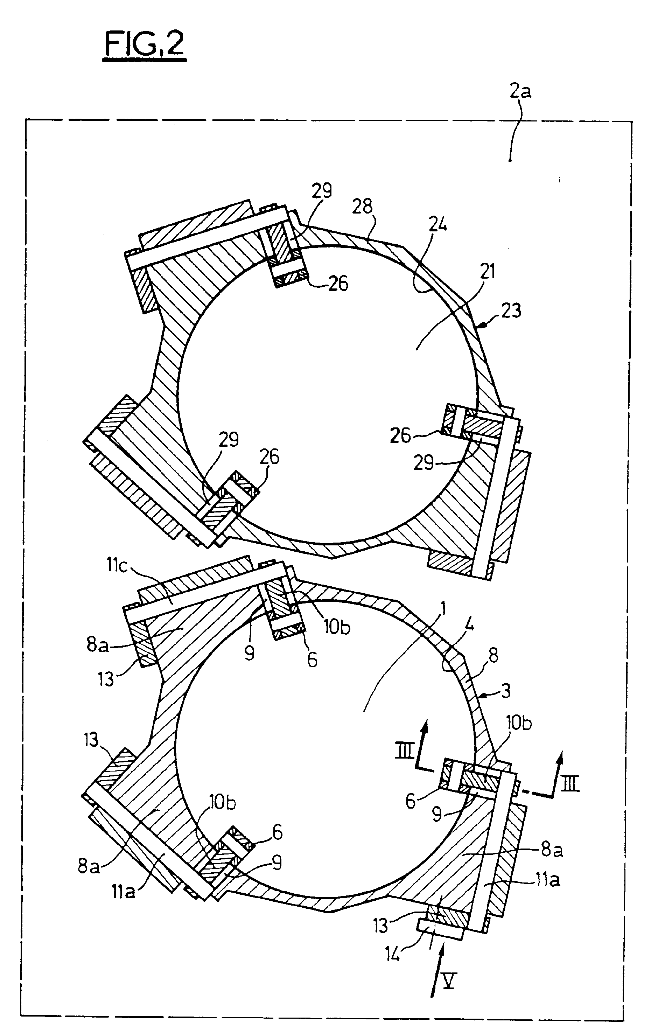

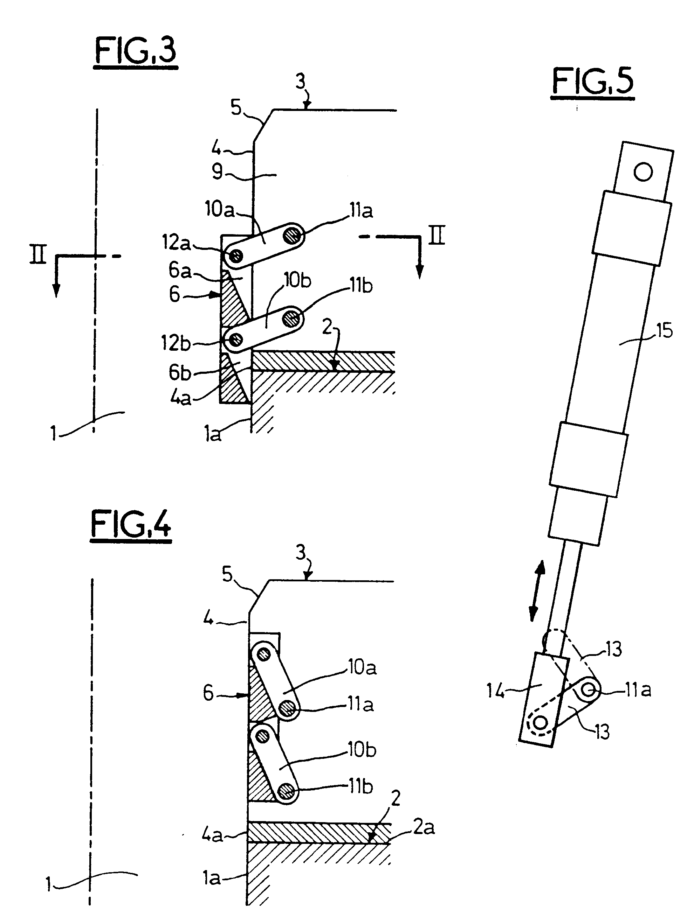

La figure 2 montre en vue de dessus deux dispositifs 3,3' indépendants, montés chacun autour d'un alésage d'un moteur à combustion interne et permettant l'introduction d'un piston dans chaque alésage. Chaque dispositif 3,23 se compose d'un corps respectivement 8,28 muni d'un orifice central 4,24 qui correspond au diamètre de l'alésage 1,21 du bloc-moteur, de trois rainures 9,29 radiales, de trois patins 6,26 logés, en position rétractée, chacun dans une rainure 9, et enfin de moyens de manoeuvre de ces patins tels que des biellettes, des axes et des bielles représentés dans les figures 3, 4 et 5.

Cette figure 2 montré, pour chaque patin, une biellette 10b, un axe de manoeuvre 11a ou 11c et une bielle 13 associée à l'axe de manoeuvre. Chaque axe de manoeuvre 11a ou 11c est guidé dans une excroissance 8a du corps 8.

Comme les deux alésages sont très proches l'un de l'autre, il faut pouvoir placer les dispositifs côte-à-côte, et chaque corps comporte alors une excroissance qui n'est pas symétrique par rapport aux deux autres, c'est-à-dire qu'un axe de manoeuvre (dans ce cas l'axe 11c) est dirigé vers la droite du patin, tandis que les deux autres axes de manoeuvre sont dirigés vers la gauche du patin. Il en est bien sûr de même pour d'autres dispositifs adjacents dans le cas d'un bloc-moteur à quatre cylindres, par exemple.

La figure 3 montre le montage d'un patin 6 et de ses deux biellettes associées 10a, 10b.

Une biellette supérieure 10a est montée de manière fixe sur un axe 11a tournant dans le corps 8 du dispositif, cet axe tournant représentant un axe de manoeuvre de l'ensemble patin-biellettes. Cette biellette 10a est reliée à son autre extrémité à un patin 6, par l'intermédiaire d'un axe 12a. Un évidement central 6a du patin 6 permet la rotation de la biellette dans le patin.

Une biellette inférieure 10b est montée de manière fixe sur un axe 11b tournant dans le corps 8 du dispositif. Cette biellette 10b est reliée à son autre extrémité au patin 6 par l'intermédiaire d'un axe 12b. Un évidement central 6b du patin 6 permet la rotation de la biellette 10b dans le patin.

Cette figure 3 montre le patin sorti, c'est-à-dire en appui sur la face interne de l'alésage 1 du bloc-moteur 2, et sur la face interne du passage traversant 4.

La figure 4 montre le même patin en position escamotée, c'est-à-dire que le patin et ses deux biellettes 10a, 10b sont complètement escamotés dans une rainure radiale 9 du corps 8, permettant ainsi l'insertion du piston dans le passage 4 du dispositif 3.

Le déplacement du patin, de sa position escamotée à sa position en appui sur la surface interne de l'orifice 4, et inversement, est un déplacement latéral et vertical, le patin restant toujours vertical. Lorsque les biellettes 10a, 10b sont en position sensiblement horizontale, le patin est dans une position latérale extrême la plus proche du centre du passage 4, donc la plus éloignée des parois 1a et 4a. Ceci permet, lors du passage des biellettes, de la position horizontale à la position représentée en figure 3, un déplacement latéral du patin en direction des parois et ainsi un placage de celui-ci contre ces parois. Ce placage des trois patins contre les parois assure le centrage du dispositif par rapport à l'alésage.

La figure 5 montre selon V de la figure 2, une bielle 13 reliée, de manière rigide, à l'extrémité de l'axe de manoeuvre 11a, cette bielle étant entraînée en rotation par la partie mobile 14 d'un organe de manoeuvre quelconque, qui est dans ce cas un vérin 15.

Le déplacement de l'extrémité mobile 14 du vérin 15 provoque donc la rotation de la bielle 13, de l'axe de manoeuvre 11a, de la biellette 10b, du patin 6, et enfin de la biellette 10a. Bien entendu, chaque bielle 13 de chaque dispositif est manoeuvrée par un vérin.

L'entraînement peut être appliqué à l'un ou l'autre des axes de rotation 11a, 11b, ou aux deux, sans changer le mode de déplacement de l'ensemble patins-biellettes, cet ensemble patins-biellettes subissant un déplacement de type "parallélogramme".

Une opération de centrage s'effectue de la manière suivante : (en référence aux figures 1a, 1b, 1c)
- les patins étant escamotés, on pose le dispositif 3 sur le bloc-moteur 2, l'axe du passage 4 étant sensiblement dans l'axe de l'alésage 1;
- on bridé le dispositif 3 légèrement, pour qu'il puisse glisser sur le bloc 2;
- on manoeuvre les patins 6 qui viennent, en fin de course, s'appuyer sur la paroi 1a de l'alésage 1 et sur la paroi 4a du passage 4, ce qui déplace légèrement le dispositif pour centrer parfaitement son passage 4 par rapport à l'alésage 1;
- on maintient fermement ce dispositif, par exemple par bridage;
- on relève les patins afin de les escamoter complètement;
- on introduit le piston dans le passage 4 du dispositif, grâce au chanfrein 5, puis dans l'alésage;
- on retire le dispositif qui servira au montage d'un piston dans le nouveau bloc-moteur qui se présentera sur la machine de montage automatique.

Bien entendu, dans le cas d'un moteur à plusieurs pistons, l'opération d'insertion de tous les pistons s'effectue simultanément.

## Revendications

1. Dispositif (3) d'insertion d'une pièce cylindrique (7) dans un orifice (1) pratiqué dans un organe mécanique (2), caractérisé par le fait qu'il comprend :
- un corps mobile (8) capable d'être posé sur une surface (2a) de l'organe mécanique (2) et d'être maintenu en position fixe par rapport audit organe,
- un passage traversant (4) pratiqué dans ledit corps (8), de section adaptée à celle de la pièce cylindrique (7),
- au moins trois patins (6) mobiles entre une position déployée de centrage, dans laquelle ils entrent en contact avec la paroi (1a) de l'orifice (1) de l'organe mécanique et une position rétractée dans laquelle ils n'empêchent pas l'insertion de la pièce cylindrique (7) dans le passage traversant (4),
- ledit corps présentant un chanfrein (5) à l'entrée du passage traversant (4), afin de faciliter l'introduction de la pièce cylindrique (7) dans le passage traversant.

2. Dispositif d'insertion selon la revendication 1, caractérisé en ce que la position déployée de centrage des patins est telle que les patins entrent également en contact avec la paroi (4a) du passage (4) du corps mobile.

3. Dispositif selon la revendication 1 ou 2, caractérisé en ce que chaque patin (6) est rendu mobile par l'intermédiaire de deux biellettes (10a,10b), la rotation de ces biellettes provoquant un déplacement latéral et vertical du patin, ce patin étant toujours en position verticale.

4. Dispositif selon la revendication 3, caractérisé en ce que le déplacement latéral des patins permet leur placage contre la paroi de l'orifice et la paroi du passage traversant, en fin de course des biellettes.

5. Dispositif selon la revendication 4, caractérisé en ce que chaque biellette tourne autour d'un axe de rotation (11a, 11b, 11c), un des deux axes de rotation (11a,11c) représentant un axe de manoeuvre de l'ensemble patins-biellettes.

6. Dispositif selon la revendication 5, caractérisé en ce que l'axe de manoeuvre est relié à une bielle (13) entraînée par un organe de manoeuvre (15).

7. Dispositif selon l'une des revendications 1 à 6, caractérisé en ce qu'il comporte trois patins (6) disposés à 120° et manoeuvrés chacun par un axe de manoeuvre.

8. Dispositif selon la revendication 7, caractérisé en ce que deux axes de manoeuvre (11a) font saillie du côté gauche de leurs patins associés, tandis que l'autre axe de manoeuvre (11c) fait saillie du côté droit, le corps étant ainsi dégagé sur une partie de sa périphérie.

9. Procédé d'insertion d'une pièce cylindrique (7) dans un orifice (1) pratiqué dans un organe mécanique (2), caractérisé par le fait qu'il comprend les étapes suivantes :
- on pose sur une surface (2a) de l'organe mécanique (2), un dispositif (3) muni d'un corps (8) présentant un passage traversant (4) de section adaptée à la pièce cylindrique (7), et un chanfrein (5) à l'entrée dudit passage, ce passage traversant du corps se trouvant approximativement aligné avec l'orifice (1) de l'organe mécanique (2);
- on centre le corps (8) précité par rapport à l'orifice de l'organe mécanique à l'aide de patins (6) qui passent d'une position rétractée à une position déployée;
- on maintient fermement en position centrée le corps par rapport à l'organe mécanique;
- on introduit la pièce cylindrique dans le passage traversant du corps précité, puis jusque dans l'orifice de l'organe mécanique.

10. Procédé selon la revendication 9, caractérisé en ce que, entre l'opération de maintien et l'opération d'introduction, on fait passer les patins de leur position déployée à leur position rétractée.

11. Procédé selon la revendication 9, caractérisé en ce que, entre l'opération de pose et l'opération de centrage, on maintient de façon lâche, le corps (8) du dispositif contre la surface (2a) de l'organe mécanique (2).

## Patentansprüche

1. Vorrichtung (3) zur Einführung eines zylindrischen Teils (7) in eine in einem mechanischen Gerät (2) eingearbeitete Öffnung (1), **dadurch gekennzeichnet,** daß sie aufweist:
- einen beweglichen Körper (8), der auf einer Fläche (2a) des mechanischen Geräts absetzbar ist und in einer festen Stellung bezüglich des Geräts haltbar ist,
- einen in den Körper (8) eingearbeiteten und ihn durchsetzenden Durchlaß (4), dessen Querschnitt an denjenigen des zylindrischen Teils (7) angepaßt ist,
- wenigstens drei Kufen (6), die zwischen einer ausgefahrenen Zentrierstellung, in der sie die Wand (la) der Öffnung (1) des mechanischen Gerätes berühren und einer eingefahrenen Stellung, in der sie die Einführung des zylindrischen Teils (7) in den ihn durchsetzenden Durchlaß (4) nicht behindern, beweglich sind, und
- eine Abschrägung (5) am Körper an der Stelle des Beginns des ihn durchsetzenden Durchlasses (4), um so die Einführung des zylindrischen Teils (7) zu erleichtern.

2. Vorrichtung nach Anspruch 1, **dadurch gekennzeichnet,** daß die ausgefahrene Zentrierstellung der Kufen derartig ist, daß die Kufen auch mit der Innenwand (4a) des Durchlasses (4) des beweglichen Körpers in Verbindung stehen.

3. Vorrichtung nach Anspruch 2, **dadurch gekennzeichnet,** daß jede Kufe (6) beweglich ist mittels zweier Schwingarme (10a, 10b), wobei die Verdrehung der Schwingarme eine seitliche und senkrechte Verschiebung der Kufe bewirkt, wobei die Kufe immer senkrecht ausgerichtet ist.

4. Vorrichtung nach Anspruch 3, **dadurch gekennzeichnet,** daß die seitliche Verschwenkung der Kufen ihr Anliegen an der Wand der Öffnung und der Wand des ihn durchsetzenden Durchlasses am Ende des Verschwenkweges der Schwingarme ermöglicht.

5. Vorrichtung nach Anspruch 4, **dadurch gekennzeichnet,** daß jede Schwingachse sich um eine Drehachse (11a, 11b, 11c) dreht, wobei eine der beiden Drehachsen (11a, 11c) eine Betätigungsachse für die Anordnung aus Kufen und Schwingarmen darstellt.

6. Vorrichtung nach Anspruch 5, **dadurch gekennzeichnet,** daß die Betätigungsachse mit einem Schwingarm (13) verbunden ist, der durch ein Betätigungsteil (15) antreibbar ist.

7. Vorrichtung nach einem der Ansprüche 1 bis 6, **dadurch** **gekennzeichnet,** daß sie drei um 120° angeordnete Kufen (6) aufweist, deren jede durch eine Betätigungsachse betätigbar ist.

8. Vorrichtung nach Anspruch 7, **dadurch gekennzeichnet,** daß zwei Betätigungsachsen (11a) von der linken Seite der zugehörigen Kufen hervorspringen, während die andere Betätigungsachse (11c) von der rechten Seite hervorspringt, so daß der Körper entlang eines Teils seines Umfangs frei ist.

9. Verfahren zur Einführung eines zylindrischen Teils (7) in eine in ein mechanisches Gerät (2) eingearbeitete Öffnung (1), **dadurch gekennzeichnet,** daß es die folgenden Schritte aufweist:
- auf einer Fläche (2a) des mechanischen Geräts (2) wird eine Vorrichtung (3) abgesetzt, die mit einem Körper (8) versehen ist, der einen ihn durchsetzenden Durchlaß (4) aufweist, dessen Querschnitt an das zylindrische Teil (7) angepaßt ist, sowie eine Abschrägung (5) am Beginn des Durchlasses aufweist, wobei dieser den Körper durchsetzende Durchlaß ungefähr zur Öffnung (1) des mechanischen Gerätes (2) ausgerichtet ist;
- der Körper (8) wird bezüglich der Öffnung des mechanischen Geräts mittels der Kufen (6) zentriert, welche von einer eingefahrenen Stellung in eine ausgefahrene Stellung übergehen;
- der Körper wird in der zentrierten Stellung bezüglich des mechanischen Geräts fest und anschlagfrei gehalten;
- das zylindrische Teil wird in den den Körper durchsetzenden Durchlaß eingeführt und anschließend in die Öffnung des mechanischen Gerätes.

10. Verfahren nach Anspruch 9, **dadurch gekennzeichnet,** daß die Kufen von der ausgefahrenen in die eingefahrene Stellung übergehen zwischen dem Halteschritt und dem Einführungsschritt.

11. Verfahren nach Anspruch 9, **dadurch gekennzeichnet,** daß der Körper (8) der Vorrichtung locker auf der Oberfläche (2a) des mechanischen Geräts (2) gehalten wird, während des Absetzschrittes und des Zentrierschrittes.

## Claims

1. A device (3) for inserting a cylindrical component (7) into an orifice (1) provided in a mechanical member (2), characterized in that it comprises:
- a moving body (8) that may be disposed on a surface (2a) of the mechanical member (2) and held in a fixed position with respect to this member;
- a through passage (4) provided in the body (8), whose cross-section is adapted to that of the cylindrical component (7);
- at least three pads (6) moving between a deployed centring position in which they come into contact with the wall (la) of the orifice (1) of the mechanical member and a retracted position in which they do not prevent the insertion of the cylindrical component (7) into the through passage (4);
- this body having a chamfer (5) at the entrance to the through passage (4) in order to facilitate the insertion of the cylindrical component (7) into the through passage.

2. An insertion device as claimed in claim 1, characterized in that the deployed centring position of the pads is such that the pads also come into contact with the wall (4a) of the passage (4) of the moving body.

3. A device as claimed in claim 1 or 2, characterized in that each pad (6) is movable by means of two connecting rods (10a, 10b), the rotation of these rods causing a lateral and vertical movement of the pad, this pad always being in a vertical position.

4. A device as claimed in claim 3, characterized in that the lateral movement of the pads makes it possible to position them against the wall of the orifice and the wall of the through passage, at the end of the stroke of the connecting rods.

5. A device as claimed in claim 4, characterized in that each connecting rod rotates about an axis of rotation (11a, 11b, 11c), one of the two axes of rotation (11a, 11c) representing a manoeuvring spindle for the pad-connecting rod assembly.

6. A device as claimed in claim 5, characterized in that the manoeuvring spindle is connected to a crank (13) driven by a manoeuvring member (15).

7. A device as claimed in one of claims 1 to 6, characterized in that it comprises three pads (6) disposed at 120° and each manoeuvred by an manoeuvring spindle.

8. A device as claimed in claim 7, characterized in that two manoeuvring spindles (11a) project from the left-hand side of their associated pads, while the other manoeuvring spindle (11c) projects from the right-hand side, the body thus being free over a part of its periphery.

9. A method for inserting a cylindrical component (7) in an orifice (1) provided in a mechanical member (2), characterized in that it comprises the following steps:
- a device (3) provided with a body (8) having a through passage (4) whose cross-section is adapted to the cylindrical component (7) and a chamfer (5) at the entrance to this passage, the through passage of the body being disposed approximately in alignment with the orifice (1) of the mechanical member (2), is disposed on a surface (2a) of the mechanical member (2);
- this body (8) is centred with respect to the orifice of the mechanical member by means of pads (6) which move from a retracted position to a deployed position;
- the body is held firmly in a centred position with respect to the mechanical member;
- the cylindrical component is inserted into the through passage of this body, then into the orifice of the mechanical member.

10. A method as claimed in claim 9, characterized in that the pads are caused to move from their deployed position to their retracted position between the holding operation and the insertion operation.

11. A method as claimed in claim 9, characterized in that the body (8) of the device is held loosely against the surface (2a) of the mechanical member (2) between the installation operation and the centring operation.
